## Europäisches Patentamt
## European Patent Office
## Office européen des brevets

(19)

(11) Veröffentlichungsnummer: **0 218 023**
B1

(12) **EUROPÄISCHE PATENTSCHRIFT**

(45) Veröffentlichungstag der Patentschrift:
**17.01.90**

(51) Int. Cl.⁴: **B65D 39/04, B65D 77/20**

(21) Anmeldenummer: **86109837.4**

(22) Anmeldetag: **17.07.86**

(54) **Geschweisster Kunststoffverschluss für Kunststoffbehälter, Verfahren zur Herstellung desselben und Vorrichtung zur Durchführung des Verfahrens.**

(30) Priorität: **10.08.85 DE 3528815**

(43) Veröffentlichungstag der Anmeldung:
**15.04.87 Patentblatt 87/16**

(45) Bekanntmachung des Hinweises auf die Patenterteilung:
**17.01.90 Patentblatt 90/3**

(84) Benannte Vertragsstaaten:
**AT DE FR GB IT NL SE**

(56) Entgegenhaltungen:
**EP-A- 0 079 816**
**DE-A- 1 536 085**
**DE-C- 1 022 155**
**DE-U- 7 219 898**
**FR-A- 2 088 530**
**GB-A- 1 469 043**
**US-A- 3 263 724**

(73) Patentinhaber: **Jacob Berg GmbH & Co. KG,
D-6501 Budenheim(DE)**

(72) Die Erfinder haben auf ihre Nennung verzichtet

(74) Vertreter: **Weber, Dieter, Dr. et al, Dr. Dieter Weber und Dipl.-Phys. Klaus Seiffert Patentanwälte
Gustav-Freytag-Strasse 25 Postfach 6145,
D-6200 Wiesbaden 1(DE)**

## Beschreibung

Die Erfindung betrifft einen Kunststoffverschluß für einen Kunststoffbehälter mit einem am Behälter angesetzten Hals, welcher aus einem Kunststoff anderer Härte oder anderer Schmelztemperatur besteht als der Verschluß und in welchen der Dichtungsrand des Verschlusses angesetzt ist, wobei eine Randfläche des Dichtungsrandes im wesentlichen unmittelbar neben einer Randfläche des Halses verläuft.

Ein derartiger Verschluß ist bekannt aus der FR-A 2 088 530. Ein solcher Verschluß besteht aus einem, im allgemeinen zylindrischen, stutzenförmigen Hals eines Kunststoffbehälters, in welchen ein entsprechendes Verschlußteil mit mehr oder weniger grober Passung eingesetzt ist. Bekannt sind diese Verschlüsse vor allem von Kunststoffkanistern für Motoröl, aber auch von Behältern für andere Flüssigkeiten wie Lebensmittel und Getränke (Speiseöl, Essig, Wein) oder flüssige Chemiprodukte.

Da die Maßhaltigkeit der Hälse von Kunststoffkanistern nicht sehr gut ist und überdies produktionsbedingte Schwankungen und Unregelmäßigkeiten in der Form dieser Hälse auftreten, ist die flüssigkeitsdichte Befestigung eines Kunststoffverschlusses in einem solchen Behälterhals nur durch eine vergleichsweise aufwendige Verschlußkonstruktion möglich. Üblicherweise ragt ein Dichtungsrand, der an seiner Außenseite ringförmig mit einer Reihe paralleler Lamellen versehen ist, tief in den Behälterhals hinein, wobei eine oder mehrere der Lamellen mehr oder weniger zufällig an der Innenwand des Behälterhalses anliegen und so für die Abdichtung sorgen. Unterhalb der Lamellen ist am Dichtungsrand häufig noch ein Steg oder Nocken ebenfalls ringförmig angesetzt, der unter dem Hals in dem Behälter eingreifen und so den Verschluß im Behälter verankern soll.

Häufig sind diese Verschlüsse auch mit einem Balg versehen, der am Dichtungsrand ansetzt und mit seinem anderen Ende in eine Ausgießöffnung übergeht. Sofern das Material des Verschlusses genügend verformbar ist, kann die Ausgießöffnung, deren Durchmesser kleiner ist als der Durchmesser des Dichtungsrandes, unter Verformung des Balges in den Behälterhals eingedrückt werden, so daß die Ausgießöffnung nicht über den oberen Rand des Behälterhalses hinausragt. Mit Hilfe eines am oberen Ende der Ausgießöffnung angebrachten Reißringes kann die Ausgießöffnung bei Bedarf aus dem Hals herausgezogen werden.

Die vorgenannten Verschlüsse weisen teilweise erhebliche Nachteile auf. So ist es z.B. möglich, mit Hilfe eines Werkzeuges, wie eines Schraubenziehers, den aus mehr oder weniger elastischem Kunststoffmaterial bestehenden Behälterverschluß herauszuhebeln, indem das Werkzeug zwischen den Behälterhals und den Dichtungsrand eingeführt wird. Da bei dieser Entfernung des Behälterverschlusses gewöhnlich keine Spuren zurückbleiben und der Behälterverschluß auch wieder in den Behälterhals eingesetzt werden kann, eignen sich derartige Behälterverschlüsse für einen mißbräuchlichen Austausch oder Versatz des Behälterinhaltes. Weiterhin ist die Dichtheit des Verschlusses nur zu gewährleisten, wenn der Behälterhals mit einer vergleichsweise hohen Präzision hergestellt wird, weshalb besonders einfache Verfahren u.U. nicht zum Einsatz kommen. Ebenso wird für den weit in den Behälter hineinragenden Dichtungsrand, die Lamellen und den Befestigungssteg bzw. die Befestigungsnocken relativ viel Material verbraucht. Außerdem erfordert die Formgebung für den Dichtungsrand und die angesetzten Dichtungs- und Befestigungselemente einen relativ hohen apparativen Aufwand, so daß auch hierin ein wesentlicher Kostenfaktor zu sehen ist.

Aus der GB-A 1 469 043 ist ein Kunststoffverschluß für Kunststoffbehälter bekannt, bei welchen der Rand eines Behälterhalses mit dem Randsteg eines Verschlusses verschweißt ist.

Dabei bestehen jedoch Behälterhals und der eingesetzte Kunststoffverschluß aus dem gleichen Material. Die Schweißverfahren, welche beim Verschweißen gleicher Materialien angewendet werden, und insbesondere das in der GB-A 1 469 043 dargestellte Schweißverfahren, sind jedoch für den eingangs genannten Verschluß nicht geeignet, da sie im allgemeinen beide Teile gleichzeitig durch Zufuhr der gleichen Wärmemenge auf dieselbe konstante Temperatur bringen. Dabei werden die aneinanderliegenden (gleichartigen) Teile praktisch über ihre ganze Dicke aufgeschmolzen, die Wärmezufuhr erfolgt im wesentlichen von den Außenwänden her. Sollte man versuchen, auf diese Weise Kunststoffe unterschiedlicher Schmelztemperatur miteinander zu verbinden, so würde der aus dem niedriger schmelzenden Kunststoff bestehende Teil bereits wegfließen, bevor der andere Teil verflüssigt ist. Schon bei der Verwendung gleicher Kunststoffe können bei der Anwendung des bekannten Verfahrens Probleme dadurch entstehen, daß die Schweißnaht mit Luftblasen durchsetzt sein kann.

Gegenüber den eingangs erwähnten Verschlüssen, die beispielsweise aus der FR-2 088 530 bekannt sind, liegt der vorliegenden Erfindung die Aufgabe zugrunde, einen Kunststoffverschluß für Kunststoffbehälter zu beschaffen, dessen Herstellung einen geringen apparativen Aufwand erfordert, der eine einfachere Herstellung des Behälters erlaubt, weniger Material erfordert, sicher am Behälterhals zu befestigen ist und ohne Beschädigung des Verschlusses oder des Behälters nicht von diesem getrennt werden kann.

Diese Aufgabe wird dadurch gelöst, daß der Verschluß als Verbindung von Dichtungsrand und Hals eine aus den verflüssigten und zusammengeflossenen unterschiedlichen Kunststoffen der nebeneinanderliegenden Randflächen gebildete Schweißnaht aufweist.

Während bei einer Ausführungsform des bekannten Verschlusses die an die eigentlichen Dichtflächen anschließenden Randflächen von Behälterhals und eingesetztem Verschlußteil im wesentlichen in ein und derselben Ebene nebeneinanderliegend angeordnet sind, ohne daß dies eine besondere technische Funktion hat, ist es für die vorliegende Erfindung wesentlich, daß eine Randfläche des Dichtungsrandes im wesentlichen unmittelbar neben einer Randfläche des Halses verläuft. In diesem Falle können nämlich die beiden unterschiedlichen Kunststoffe gleichzeitig auf eine Temperatur oberhalb ihres jeweiligen Schmelzpunktes erhitzt werden, ineinanderfließen und so die gewünschte Schweißnaht bilden.

Dabei liegen die erwähnten Randflächen vor dem Verschweißen vorzugsweise in einer Ebene nebeneinander, so daß sie von einem Schweißwerkzeug mit ebener Schweißfläche leicht gleichzeitig erfaßt werden können.

Die Randflächen können jedoch auch in einem weitgehend beliebigen Winkel zueinander stehen, so lange sie nur von einem geeignet geformten Schweißwerkzeug gleichzeitig erhitzt werden und die beiden unterschiedlichen, flüssigen Kunststoffe dabei ineinanderfließen können. Das Ineinanderfließen wird unter Umständen dadurch erleichtert, daß zwischen den beiden miteinander zu verschweißenden Teilen ein Trennspalt von geeigneter Breite vorgesehen ist.

Dabei kommt es darauf an, daß die beiden miteinander zu verschweißenden Kunststoffe möglichst gleichzeitig ihre jeweilige Schmelztemperatur erreichen und somit im Augenblick ihrer Verflüssigung augenblicklich ineinanderfließen können. Dazu kann es erforderlich sein, mit dem Erhitzen des höher schmelzenden Kunststoffes etwas eher zu beginnen als mit dem Erhitzen des niedriger schmelzenden Kunststoffes oder aber bei gleichzeitigem Beginn des Erhitzungsvorganges dem höher schmelzenden Kunststoff mehr Wärmeenergie zuzuführen als dem niedriger schmelzenden Kunststoff.

Die zuerst genannte Möglichkeit kann man leicht verwirklichen, indem man die beiden Randflächen zwar parallel zueinander jedoch nicht in einer gemeinsamen Ebene sondern etwas versetzt gegeneinander anordnet, so daß die Randfläche des höher schmelzenden Kunststoffes gegenüber der Randfläche des niedriger schmelzenden Kunststoffes etwas übersteht und mit der ebenen Schweißfläche eines Schweißwerkzeuges entsprechend eher in Berührung kommt.

Das Verfahren wird im einzelnen später erläutert.

Die Verschweißung des Verschlusses mit dem Behälterhals ist in mehrfacher Hinsicht vorteilhaft. So ist die Maßhaltigkeit des Behälterhalses und auch des Dichtungsrandes des Verschlusses von untergeordneter Bedeutung, solange nur die zu verschweißenden Teile dicht genug beieinanderliegen, was mit den konventionellen Mitteln der Massenfertigungstechnik ohne weiteres erreichbar ist. Weiterhin entfällt der relativ hohe Aufwand für die Formgebung des Dichtungsrandes mit anhängenden Lamellen und Befestigungselementen. Außerdem ist die Schweißnaht absolut flüssigkeitsdicht und der Verschluß läßt sich ohne erkennbare Beschädigungen nicht vom Behälter trennen.

Eine kostengünstige und Material sparende Herstellungsweise ist insofern von besonderem Vorteil, als es sich bei derartigen Verschlüssen um ein Massenprodukt handelt, das in sehr großen Stückzahlen hergestellt und an die entsprechenden Behälter angebracht wird. Erfindungsgemäß ist daher vorgesehen, daß der Hals des Behälters und der Dichtungsrand des Verschlusses im wesentlichen zylindrisch sind, was ihre Herstellung und Handhabung ebenfalls erleichtert.

Bei einem Kunststoffverschluß nach der Erfindung ist weiterhin vorgesehen, daß der Dichtungsrand einen überstehenden Verschlußflansch aufweist und auf dem Halsrand aufliegt. Auf diese Weise erreicht man, daß nach dem Einsetzen des Verschlusses in die Öffnung des Behälterhalses der Verschluß in seiner Position im wesentlichen fixiert ist, so daß die Verschweißung der dadurch korrekt positionierten Teile ohne weitere Justierung des Verschlusses erfolgen kann.

Besonders vorteilhaft ist es dabei, wenn bei einem Verschluß gemäß der Erfindung der Halsrand als Flansch mit hochstehendem Randsteg ausgebildet ist, dessen Höhe der Dicke des Verschlußflansches entspricht und dessen innere Abmessungen größer als die äußeren Abmessungen des Verschlußflansches sind. Im Falle eines zylindrischen Verschlusses bedeutet dieses, daß der am Dichtungsrand des Verschlusses befindliche ringförmige Verschlußflansch auf dem als Flansch ausgebildeten Rand des Behälterhalses aufliegt, wobei der Verschlußflansch ebenfalls ringförmig von dem am Flansch angesetzten Randsteg mit Passung umschlossen wird. Gleichzeitig ist die Höhe dieses Randsteges so bemessen, daß seine Oberkante mit der oberen Kante des Verschlußflansches abschließt, so daß seine dem Behälter abgewandte Oberfläche unmittelbar neben der dem Behälter abgewandten Oberfläche des Verschlußflansches und zusammen mit dieser in einer gemeinsamen Ebene liegt.

Eine derartige Ausbildung des Verschlusses und des Halsrandes ermöglicht einen besonders einfachen und sicheren Zugang entsprechender Schweißvorrichtungen.

Hinsichtlich des Verfahrens zur Herstellung eines Kunststoffverschlusses für einen Kunststoffbehälter, welcher aus einem Kunststoff anderer Härte oder Schmelztemperatur besteht als der Verschluß, mit einem am Behälter angesetzten Hals, in welchen ein Dichtungsrand des Verschlusses eingesetzt ist, wird die der Erfindung zugrundeliegende Aufgabe dadurch gelöst, daß gleichzeitig zumindest ein Teil der nebeneinanderliegenden Randfläche des Dichtungsrandes und der Randfläche des Halses auf eine Temperatur etwas oberhalb der Schmelztemperatur des jeweiligen Kunststoffes erhitzt wird.

Durch das gleichzeitige Erhitzen der beiden Kunststoffe von unterschiedlicher Härte und/oder Schmelztemperatur erreicht man, daß beide Kunststoffe flüssig werden, ineinanderfließen und so eine feste und dichte Schweißnaht bilden. Zwar sind Verfahren bekannt, bei denen Kunststoffteile durch gleichzeitiges Erhitzen beider Teile miteinander verschweißt werden, jedoch handelt es sich dabei ausschließlich um die Verschweißung von Kunststoffmaterialien, die im wesentlichen jeweils die gleiche Härte und Schmelztemperatur aufweisen. Weiterhin sind Verfahren bekannt, bei denen Kunststoffe unterschiedlicher Schmelztemperatur dadurch miteinander verbunden werden, daß der niedrigere schmelzende Kunststoff verflüssigt wird und dadurch mit dem fest bleibenden, höher schmelzenden Kunststoff verklebt. Eine derartige Klebeverbindung ist jedoch nicht sehr fest und kann sich beispielsweise schon allein durch das Ziehen an einem Reißring bei der oben beschriebenen gängigen Ausführungsform lösen.

Weiterhin ist bei dem Verfahren gemäß der Erfindung vorgesehen, daß die nebeneinanderliegenden Randflächen des Dichtungsrandes und des Halses beiderseits ihrer Trennlinie auf ihrer ganzen Länge gleichzeitig auf eine Temperatur etwas oberhalb der Schmelztemperatur des jeweiligen Kunststoffes erhitzt werden.

Auf diese Weise erreicht man mit einem einzigen kurzen Schweißvorgang eine vollständige Abdichtung und Befestigung des Verschlusses am Behälter.

Hinsichtlich der Vorrichtung zur Durchführung des erwähnten Verfahrens wird die der Erfindung zugrundeliegende Aufgabe dadurch gelöst, daß ein Schweißelement mindestens Schweißflächen aufweist, die parallel zu den zu verschweißenden Randflächen des Dichtungsrandes und des Halses verlaufen und mit diesen Flächen in Kontakt bringbar sind.

Beim Kontakt der Fläche des Schweißelementes mit den Randflächen des Dichtungsrandes und des Halses werden diese erhitzt bis sie flüssig werden, ineinanderfließen und so die Schweißnaht bilden. Da die Fläche des Schweißelementes beide Randflächen gleichzeitig berührt, kann man davon ausgehen, daß zunächst der niedriger schmelzende Kunststoff zu fließen beginnt, dabei jedoch den Kontakt mit der heißen Schweißfläche verliert, solange das Schweißelement durch die Randfläche des noch festen höher schmelzenden Kunststoffteils abgestützt wird. Dadurch wird eine Überhitzung und Zersetzung des niedriger schmelzenden Kunststoffes vermieden. Sobald auch der höher schmelzende Kunststoff flüssig wird, fließen beide Kunststoffe ineinander und bilden die Schweißnaht.

Je nach der Art, dem Fließverhalten und der Dichte der zu verbindenden Kunststoffe kann der vor dem Verschweißen entlang der Trennlinie verlaufende Spalt zwischen den zu verbindenden Kunststoffteilen unterschiedlich breit, tief und/oder geneigt verlaufen, so daß sich eine optimale Durchmischung der flüssigen Komponenten ergibt.

Zur Herstellung einer möglichst sauberen und gleichmäßigen Schweißnaht ist erfindungsgemäß vorgesehen, daß als Widerlager für das auf die Randflächen gepreßte Schweißelement ein Amboß vorgesehen ist. Die Möglichkeit und die Art der Anbringung dieses Ambosses hängt dabei jedoch von der Form des Verschlusses und des Halses und von der Lage der Schweißnaht ab.

Für die erfindungsgemäße Ausführungsform eines geschweißten Kunststoffbehälterverschlusses, bei welcher der Hals einen Flansch mit Randsteg und der Dichtungsrand einen Verschlußflansch bzw. einen Ansatz von der Höhe des Randsteges aufweisen, ist es zweckmäßig und vorteilhaft, wenn das Schweißelement die Form eines Hohlzylinders und der Amboß die Form eines geteilten Ringes hat.

Dabei ist der Innendurchmesser des Hohlzylinders kleiner als der Außendurchmesser des ringförmigen Ansatzes, während der Außendurchmesser des Hohlzylinders größer ist als der Innendurchmesser des kreisförmigen Randsteges. Auf diese Weise ist gewährleistet, daß die Schweißfläche des Schweißelementes auf jeden Fall die nebeneinanderliegenden Randflächen des Ansatzes und des Randsteges beiderseits der Trennlinie bzw. des Trennspaltes erfaßt und eine vollständige, kreisringförmige Schweißnaht erzeugt.

Weiterhin ist zweckmäßig, wenn gleichzeitig der Innendurchmesser des Hohlzylinders größer ist als der Innendurchmesser des Ansatzes, während der Außendurchmesser des Hohlzylinders kleiner ist als der Außendurchmesser des Randsteges. Durch diese Maßnahme ist nämlich sichergestellt, daß von den zu verschweißenden Kunststoffmaterialien innerhalb und/oder außerhalb des Hohlzylinders kleine Randbereiche erhalten bleiben, so daß der flüssige Kunststoff nicht seitlich abfließt.

Ein weiteres erfindungsgemäßes Merkmal liegt darin, daß das Schweißelement durch eine Heizwicklung auf seinem äußeren Umfang heizbar ist.

Die Wärmezufuhr von außen bewirkt einen Temperaturgradienten auf der Oberfläche des Schweißelementes in radialer Richtung. Auf diese Weise erhält beispielsweise der weiter außenliegende, höher schmelzende Randsteg des Halses eine höhere Wärmezufuhr als der niedriger schmelzende Ansatz im inneren Bereich der Schweißfläche, wodurch sich mit Vorteil eine schnellere Verflüssigung und Durchmischung beider Kunststoffe ergibt, so daß der Schweißvorgang insgesamt beschleunigt abläuft. Selbstverständlich kann eine entsprechende Heizwicklung auch im Inneren des Hohlzylinders oder eines anders geformten Schweißelementes angebracht werden, falls der höher schmelzende Kunststoff diesem Bereich näher liegen sollte.

In einer besonders bevorzugten Ausführungsform der Erfindung ist vorgesehen, daß das Schweißelement eine Sonotrode (Ultraschallkopf) ist.

Das Ultraschallschweißen ist an sich schon bekannt. Dabei überträgt ein Ultraschallkopf (Sonotrode) Ultraschallschwingungen auf das zu erwärmende bzw. zu verschweißende Objekt. Bei genügender Intensität der Ultraschallwellen wird durch inelastische Prozesse bzw. durch Reibung in den Übergangsbereichen in dem Kunststoff so viel Energie absorbiert und in Wärmeenergie umgesetzt, daß er zu schmelzen beginnt. Dabei haben die Ultraschallwellen den Vorteil, daß man sie mit einer gewissen Richtwirkung ausstrahlen und so auch ganz gezielt innere Bereiche des zu verschweißenden Kunststoffes erwärmen kann. Die Erwärmung erfolgt also nicht nur oberflächlich, sondern erfaßt gleichzeitig auch tiefere Bereiche, was ebenfalls zu einer Beschleunigung des Schweißvorganges beiträgt und darüberhinaus auch eine tiefere und bessere Schweißnaht ergibt.

Die Wärmezufuhr wird dabei sehr schnell unterbrochen, wenn der Kunststoff aufgrund seiner Verflüssigung den Kontakt mit der Sonotrode verliert, so daß die dem Kunststoff zugeführte Wärmemenge durch die Verflüssigung sozusagen selbsttätig reguliert wird. Dabei kann das zusätzliche Aufprägen eines Temperaturgradienten, wie vorstehend beschrieben, ebenfalls vorteilhaft sein.

Weitere Vorteile, Merkmale und Anwendungsmöglichkeiten der vorliegenden Erfindung ergeben sich aus der nachfolgenden Beschreibung bevorzugter Ausführungsformen und den dazugehörigen Figuren.

Es zeigen:

Figur 1 einen Schnitt durch einen in einen Behälterhals eingesetzten Kunststoffverschluß in einer bevorzugten Ausführungsform,

Figur 2a eine Ansicht auf Figur 1 von oben vor der Verschweißung,

Figur 2b eine Ansicht auf Figur 1 von oben nach der Verschweißung,

Figur 3a einen Teilausschnitt aus Figur 1,

Figuren 3b und c den gleichen Teilausschnitt wie Figur 3a kurz vor bzw. nach der Verschweißung,

Figur 4a eine weitere Ausführungsform, wobei vom Verschluß nur der Dichtungsrand dargestellt ist,

Figur 4b und c entsprechen den Figuren 3b und 3c für die Ausführungsform nach Figur 4a,

Figuren 5a bis c eine weitere Ausführungsform analog zu den Figuren 4a bis c und

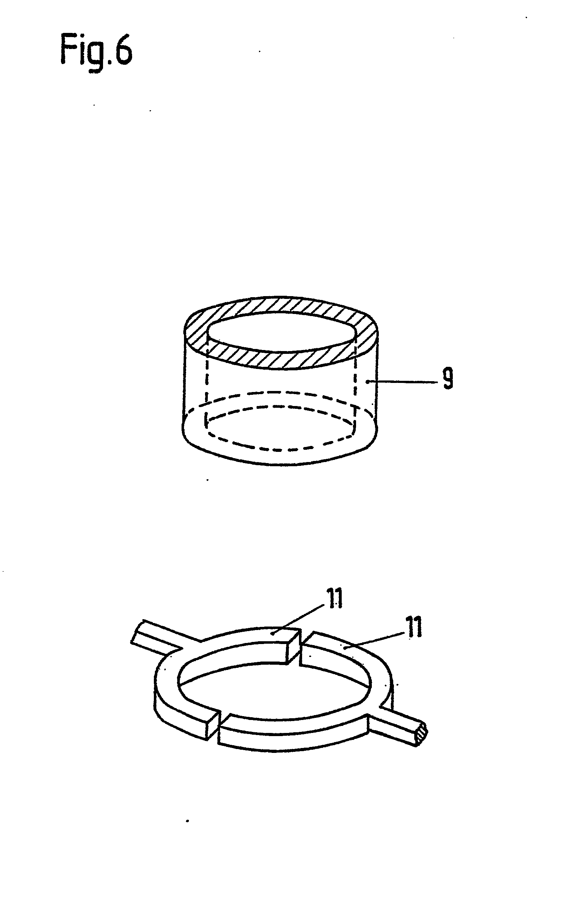

Figur 6 eine Schweißvorrichtung in der bevorzugten Ausführungsform.

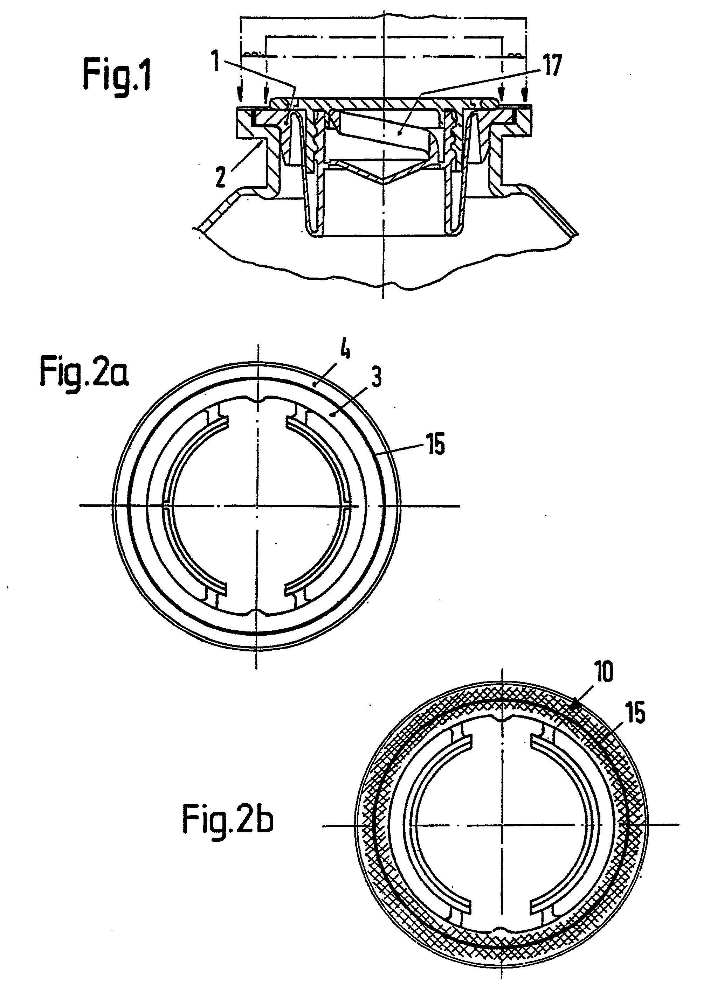

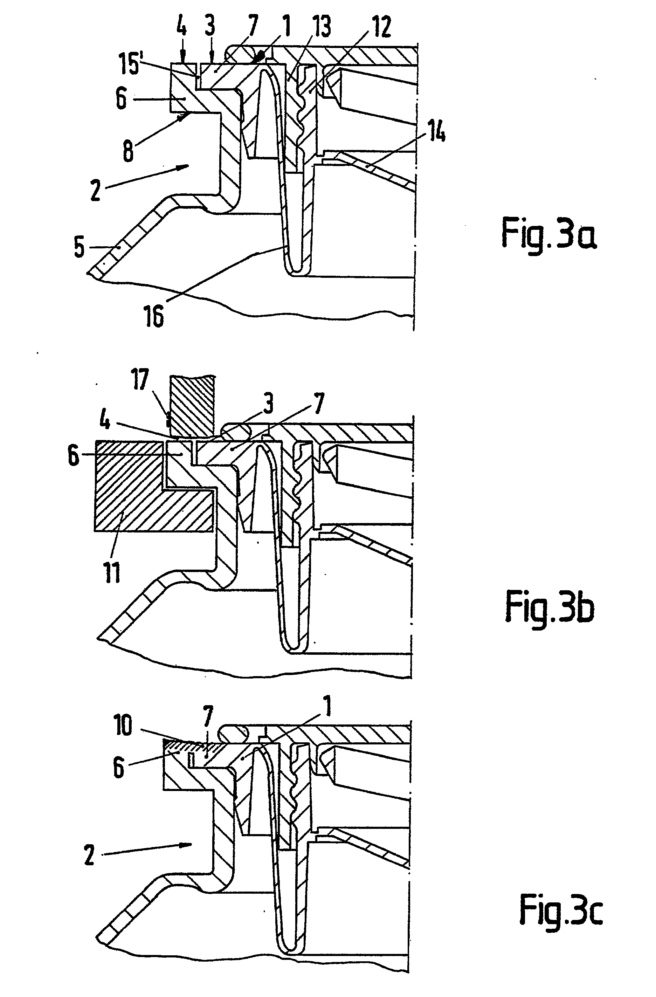

Figur 1 und die Figuren 3a bis c zeigen im Schnitt eine bevorzugte Ausführungsform eines Kunststoffverschlusses für Kunststoffbehälter.

Der Hals 2 des Behälters 5 hat an seinem oberen Ende einen als Flansch ausgebildeten Halsrand 8 mit einem Randsteg 6, dessen Höhe gerade der Dicke (bzw. der Höhe) des Ansatzes 7 des Dichtungsrandes 1 entspricht, so daß die Randfläche 3 des Ansatzes 7 (Verschlußflansch) und die Randfläche 4 des Randsteges unmittelbar nebeneinander in einer gemeinsamen Ebene liegen. An den Dichtungsrand 1 schließt sich ein Balg 16 an, der ein Einstülpen des Verschlusses ermöglicht. An seinem anderen Ende geht der Balg 16 in eine Ausgießtülle 12 über, die mit einem Schraubgewinde versehen ist, auf das der Schraubverschluß 13 aufgeschraubt ist. Die Ausgießöffnung ist zusätzlich durch eine Siegelmembran 14 gesichert. In Figur 1 ist zusätzlich noch ein Reißring 17 zu erkennen, mit Hilfe dessen die über dem Balg 16 mit dem Dichtungsrand 1 verbundene Ausgießtülle 12 aus dem Hals 2 herausgezogen werden kann.

Zwischen dem Ansatz 7 und dem Randsteg 6 befindet sich ein schmaler Trennspalt 15', der in Figur 2a als Trennlinie 15 dargestellt ist. Die Breite dieses Spaltes wird auf das flüssige Kunststoffmaterial abgestimmt; ebenso kann der Trennspalt 15' in dem in Figur 3a dargestellten Schnitt auch geneigt verlaufen. Ansatz 7 und Randsteg 6 müssen also nicht notwendigerweise rechtwinklige Ecken aufweisen.

Die Figur 3b stellt zusätzlich zu dem Verschluß auch das Schweißelement 9 und den als Widerlager dienenden Amboß 11 im Querschnitt dar. Bei dieser Ausführungsform hat das Schweißelement 9 die Form eines Hohlzylinders, dessen Durchmesser und Wandstärke so gewählt sind, daß die Schweißfläche die Randflächen 3 und 4 beiderseits des Trennspalts 15' auf dem gesamten Umfang des Verschlusses weitgehend, jedoch nicht vollständig bedeckt.

Zur Erzeugung eines Temperaturgradienten in radialer Richtung des Schweißelementes 9 ist auch die Heizwicklung 17 im Querschnitt dargestellt.

Figur 3b stellt den Verschluß unmittelbar vor dem Schweißvorgang dar. Beim Absenken der Sonotrode 9 auf die Randflächen 3 und 4 beginnt der — hier als niedriger schmelzend angenommene — Ansatz 7 des Dichtungsrandes 1 zu zerfließen, wobei der Kontakt zur Sonotrode 9 schlechter und eine weitere Aufheizung der Flüssigkeit vermieden wird. Gleichzeitig bleibt jedoch der Kontakt zwischen Sonotrode 9 und Randsteg 6 erhalten, so daß auch dieser auf seine Schmelztemperatur erwärmt wird und sich schließlich im flüssigen Zustand mit dem flüssigen Kunststoffmaterial des Ansatzes 7 vermischt.

Die so gebildete Schweißnaht 10 ist in Figur 3c zu erkennen. In diesem Zustand ist der Dichtungsrand 1 über den Randsteg 6 absolut flüssigkeitsdicht und fest mit dem Hals 2 des Behälters 5 verbunden. Die Festigkeit der Schweißnaht 10 entspricht dabei der Festigkeit des Verschluß- bzw. des Behältermaterials selbst.

Die Herstellung des Dichtungsrandes 1 und damit des gesamten Verschlusses erfordert bei dieser Ausführungsform erheblich weniger Material als im Falle der bekannten Verschlüsse mit Dichtungslamellen und Befestigungselementen.

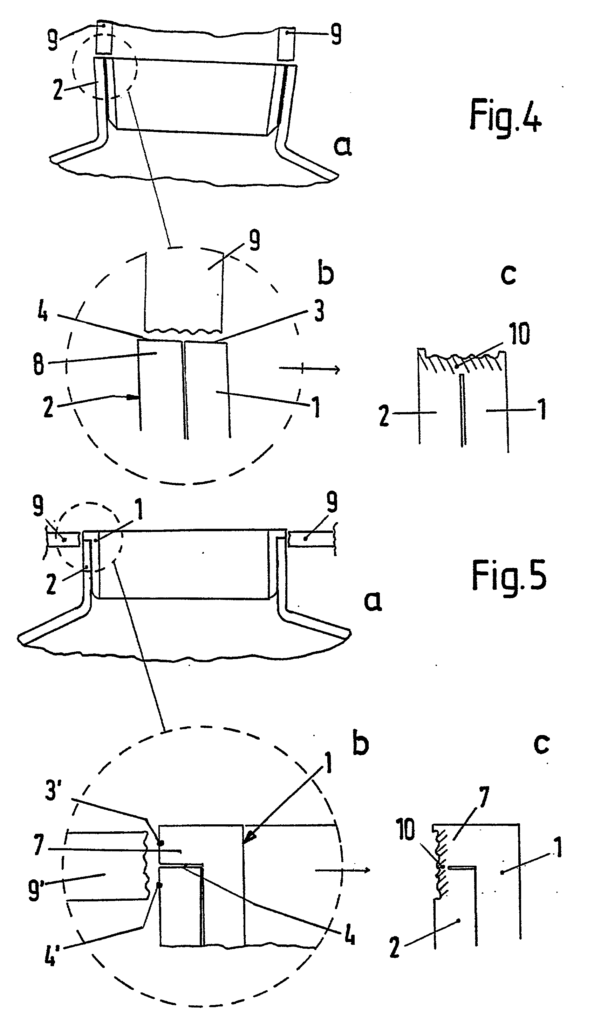

In Figur 4a ist eine weitere Ausführungsform eines Behälterhalses und des zugehörigen Verschlusses im Querschnitt dargestellt. Dabei ist vom Verschluß nur der Dichtungsrand 1 sichtbar. Der Hals 2 des Behälters 5 verläuft bei dieser Ausführungsform konisch ebenso wie der Dichtungsrand 1 des Verschlusses. Diese Ausführungsform ist besonders einfach und materialsparend herzustellen. Der Dichtungsrand 1 erhält durch die konische Form des Halses 2 einen ausreichenden festen Sitz. Eventuell überstehendes Material im Bereich der Randflächen kann durch das Schweißelement 9 weggeschmolzen werden. Die Figuren 4b und 4c stellen analog zu den Figuren 3b und 3c den Verschluß unmittelbar vor und nach dem Verschweißen dar. In diesem Fall verläuft der Trennspalt 15' im übrigen nicht senkrecht sondern etwas geneigt zur Schweißebene.

Die Figur 5a stellt analog zu Figur 4a eine weitere Ausführungsform im Querschnitt dar, bei welcher der Hals 2 ebenfalls eine sehr einfache Form hat. Der Dichtungsrand 1 weist auch hier einen Ansatz 7 auf, der auf dem Rand 8 des Halses 2 aufliegt, so daß sich als nebeneinanderliegende Schweißflächen die seitlichen Randflächen 3' und 4' des Ansatzes 7 bzw. des Halses 2 ergeben. Dementsprechend wird das Schweißelement 9' seitlich zugeführt. In diesem Fall ist jedoch das Schweißen mit einem einzigen Schweißvorgang nur schlecht möglich, da das konzentrische Zuführen mehrerer Schweißelemente 9', welche in dieser Ausführungsform in der Draufsicht kreisbogenförmig sind, praktisch nicht durchführbar ist. Zum Erzielen einer durchgehend umlaufenden Schweißnaht können beispielsweise kreuz- oder sternförmig gegenüberliegende, in der Draufsicht kreisbogenförmige Schweißelemente 9' zwei- oder mehrmals angesetzt werden.

Die Figuren 5b und 5c stellen wiederum den Bereich der Schweißnaht kurz vor und nach dem Verschweißen dar. Die Figur 2b zeigt die Draufsicht auf eine Schweißnaht bei einer Ausführungsform gemäß den Figuren 1 und 3a bis c.

Die Schweißnaht 10 läßt ein gewisses Muster erkennen, welches vom Abdruck der Sonotrodenschweißfläche herrührt, welche im allgemeinen mit einem gewissen Muster bzw. einer Aufrauhung versehen wird, um eine bessere Wärmeerzeugung zu erreichen. Das Verfahren ist jedoch auch mit einer völlig glatten Schweißfläche durchführbar, insbesondere wenn das Schweißelement keine Sonotrode sondern ein auf konventionelle Weise heizendes Schweißelement ist.

## Patentansprüche

1. Kunststoffverschluß für einen Kunststoffbehälter mit einem am Behälter (5) angesetzten Hals (2), welcher aus einem Kunststoff anderer Härte oder anderer Schmelztemperatur besteht als der Verschluß und in welchen der Dichtungsrand (1) des Verschlusses eingesetzt ist, wobei eine Randfläche (3, 3') des Dichtungsrandes (1) im wesentlichen unmittelbar neben einer Randfläche (4, 4') des Halses (2) verläuft, dadurch gekennzeichnet, daß der Verschluß als Verbindung von Dichtungsrand (1) und Hals (2) eine aus den verflüssigten und zusammengeflossenen unterschiedlichen Kunststoffen der nebeneinanderliegenden Randflächen (3, 4 bzw. 3', 4') gebildete Schweißnaht (10) aufweist.

2. Kunststoffverschluß nach Anspruch 1, dadurch gekennzeichnet, daß der Hals (2) des Behälters (5) und der Dichtungsrand (1) des Verschlusses im wesentlichen zylindrisch sind.

3. Kunststoffverschluß nach Anspruch 1 oder 2, dadurch gekennzeichnet, daß der Dichtungsrand (1) einen überstehenden Verschlußflansch (7) aufweist, der auf der Randfläche (4) des Halsrandes (8) aufliegt.

4. Kunststoffverschluß nach Anspruch 3, dadurch gekennzeichnet, daß der Halsrand (8) als Flansch mit einem hochstehenden Randsteg (6) ausgebildet ist, dessen Höhe der Dicke des Verschlußflansches (7) entspricht und dessen innere Abmessungen größer sind als die äußeren Abmessungen des Verschlußflansches (7), so daß der Verschlußflansch (7) von dem am Flansch des Halsrandes (8) angesetzten Randsteg (6) mit Passung umschlossen wird.

5. Kunststoffverschluß nach Anspruch 3, dadurch gekennzeichnet, daß die äußeren Abmessungen des Verschlußflansches (7) mit den äußeren Abmessungen des Halsrandes (8) übereinstimmen.

6. Verfahren zur Herstellung eines Kunststoffverschlusses nach einem oder mehreren der Ansprüche 1 bis 5, dadurch gekennzeichnet, daß gleichzeitig zumindest ein Teil der nebeneinanderliegenden Randflächen (3, 3') des Dichtungsrandes (1) und der Randfläche (4, 4') des Halses (2) auf eine Temperatur etwas oberhalb der Schmelztemperatur des jeweiligen Kunststoffes erhitzt wird.

7. Verfahren nach Anspruch 6, dadurch gekennzeichnet, daß die nebeneinanderliegenden Randflächen (3, 4) des Dichtungsrandes (1) und des Halses (2) beidseitig ihrer Trennlinie (15) auf ihrer ganzen Länge gleichzeitig auf eine Temperatur etwas oberhalb der Schmelztemperatur des jeweiligen Kunststoffes erhitzt werden.

8. Vorrichtung zum Verschweißen eines Kunststoffverschlusses mit dem Hals (2) eines Kunststoffbehälters (5), wobei der Verschluß und der Hals (2) des Behälters (5) aus Kunststoffen unterschiedlicher Härte oder Schmelztemperatur bestehen, mit mindestens einem Schweißelement (9, 9'), welches Schweißflächen aufweist, dadurch gekennzeichnet, daß eine Heizwicklung auf dem äußeren Umfang des Schweißelementes (9, 9') angebracht ist.

9. Vorrichtung zum Verschweißen eines Kunststoffverschlusses mit dem Hals (2) eines Kunststoffbehälters (5), wobei der Verschluß und der Hals (2) des Behälters (5) aus Kunststoffen unterschiedlicher Härte oder Schmelztemperatur bestehen, mit einem Schweißelement (9), welches Schweißflächen aufweist, dadurch gekennzeichnet, daß eine Heizwicklung auf der Innenseite des als Hohlkörper ausgebildeten Schweißelementes (9) angebracht ist.

10. Vorrichtung nach Anspruch 8 oder 9, dadurch gekennzeichnet, daß das Schweißelement (9) die Form eines Zylinders hat.

## Claims

1. A plastics closure for a plastics container having a neck (2) which is fitted to the container (5) and which comprises a plastics material of different hardness or different melting temperature from the closure and into which the sealing edge (1) of the closure is inserted, wherein an edge surface (3, 3') of the sealing edge (1) extends substantially directly adjacent an edge surface (4, 4') of the neck (2), characterised in that the closure, as the connection between the sealing edge (1) and the neck (2), has a welded seam (10) formed from the liquefied and coalesced different plastics materials of the juxtaposed edge surfaces (3, 4 and 3', 4' respectively).

2. A plastics closure according to claim 1, characterised in that the neck (2) of the container (5) and the sealing edge (1) of the closure are substantially cylindrical.

3. A plastics closure according to claim 1 or claim 2, characterised in that the sealing edge (1) has a projecting closure flange (7) which lies on the edge surface (4) of the edge (8) of the neck.

4. A plastics closure according to claim 3, characterised in that the edge (8) of the neck is in the form of a flange with an upstanding edge limb portion (6), the height of which corresponds to the thickness of the closure flange (7) and the internal dimensions of which are greater than the external dimensions of the closure flange (7) so that the closure flange (7) is enclosed, with a fit, by the edge limb portion (6) which is disposed on the flange of the edge (8) of the neck.

5. A plastics closure according to claim 3, characterised in that the external dimensions of the closure flange (7) are identical to the external dimensions of the edge (8) of the neck.

6. A process for the production of a plastics closure according to one or more of claims 1 to 5, characterised in that at least a part of the juxtaposed edge surfaces (3, 3') of the sealing edge (1) and the edge surface (4, 4') of the neck (2) is simultaneously heated to a temperature somewhat above the melting temperature of the respective plastics material.

7. A process according to claim 6, characterised in that the juxtaposed edge surfaces (3, 4) of the sealing edge (1) and the neck (2) are simultaneously heated on both sides to their separating line (15) over their entire length to a temperature somewhat above the melting temperature of the respective plastics material.

8. Apparatus for welding a plastics closure to the neck (2) of a plastics container (5) wherein the closure and the neck (2) of the container (5) comprise plastics materials of different hardness or melting temperature, with at least one welding element (9, 9') having welding surfaces, characterised in that a heating winding is disposed on the outer periphery of the welding element (9, 9').

9. Apparatus for welding a plastics closure to the neck (2) of a plastics container (5) wherein the closure and the neck (2) of the container (5) comprise plastics materials of different hardness or melting temperature, with at least one welding element (9, 9') having welding surfaces, characterised in that a heating winding is disposed on the inside of the welding element (9) which is in the form of a hollow body.

10. Apparatus according to claim 8 or claim 9, characterised in that the welding element (9) is in the shape of a cylinder.

## Revendications

1. Fermeture en matière plastique pour un récipient en matière plastique avec col (2) monté sur le récipient (5), composé d'une matière d'une dureté ou d'une température de fusion différente de celle de la fermeture et dans lequel le bord d'étanchéité (1) de la fermeture est introduit de telle sorte qu'une surface marginale (3, 3') du bord d'étanchéité (1) est disposée sensiblement au voisinage immédiat d'une surface marginale (4, 4') du col (2), caractérisée en ce que la fermeture comporte, pour l'assemblage du bord d'étanchéité (1) et du col (2), un cordon de soudure (10) formé par les matières plastiques différentes, liquéfiées et mélangées ensemble, des surfaces marginales (3, 4 ou 3', 4') disposées côte-à-côte.

2. Fermeture en matière plastique selon la revendication 1, caractérisée en ce que le col (2) du récipient (5) et le bord d'étanchéité (1) de la fermeture sont sensiblement cylindriques.

3. Fermeture en matière plastique selon la revendication 1 ou 2, caractérisée en ce que le bord d'étanchéité (1) comporte une bride de fermeture (7) en saillie portant sur la surface de bordure (4) du bord du col (8).

4. Fermeture en matière plastique selon la revendication 3, caractérisée en ce que le bord du col (8) est agencé en forme de bride avec une nervure marginale (6) faisant saillie, dont la hauteur correspond à l'épaisseur de la bride de fermeture (7) et dont les dimensions intérieures sont supérieures aux dimensions extérieures de la fermeture (7), de façon que la bride de fermeture (7) soit entourée par la nervure marginale (6) montée sur la bride du bord du col (8) avec un certain ajustage.

5. Fermeture en matière plastique selon la revendication 3, caractérisée en ce que les dimensions extérieures de la bride de fermeture (7) correspondent aux dimensions extérieures du bord du col (8).

6. Procédé pour la fabrication d'une fermeture de matière plastique selon l'une quelconque ou plusieurs des revendications 1 à 5, caractérisée en ce qu'au minimum une partie des surfaces marginales adjacentes (3, 3') du bord d'étanchéité (1) et des surfaces marginales (4, 4') du col (2) sont chauffées à une température un peu supérieure à la température de fusion des matières plastiques respectives.

7. Procédé selon la revendication 6, caractérisée en ce que les surfaces de bordure (3, 4) juxtaposées du bord d'étanchéité (1) et du col (2) sont chauffées simultanément des deux côtés de leur ligne de séparation (15) sur toute leur longueur à une température un peu supérieure à la température de fusion des matières plastiques respectives.

8. Dispositif pour le soudage d'une fermeture en matière plastique sur le col (2) d'un récipient en matière plastique (5), dans lequel la fermeture et le col (2) du récipient (5) sont composés de matières plastiques de dureté ou de températures de fusion différentes, au moyen d'un élément de soudure (9, 9') au moins, comportant des surfaces de soudure, caractérisé en ce qu'un enroulement chauffant est monté sur la périphérie extérieure de l'élément de soudure (9, 9').

9. Dispositif pour le soudage d'une fermeture en matière plastique sur le col (2) d'un récipient en matière plastique (5), dans lequel la fermeture et le col (2) du récipient (5) sont composés de matières plastiques de dureté ou de températures de fusion différentes, au moyen d'un élément de soudure (9) comportant des surfaces de soudure, caractérisé en ce qu'un enroulement chauffant est monté sur le côté intérieur de l'élément de soudure (9) agencé comme un corps creux.

10. Dispositif selon la revendication 8 ou 9, caractérisé en ce que l'élément de soudure (9) a la forme d'un cylindre.

Fig.1

1

17

2

Fig.2a

4

3

15

Fig.2b

10

15

Fig.3a

Fig.3b

Fig.3c

Fig.4

Fig.5

# Fig.6